# EUROPEAN PATENT SPECIFICATION

(11) **EP 0 499 861 B1**
(45) Date of publication and mention of the grant of the patent: **17.01.1996**
(21) Application number: 92101647.3
(22) Date of filing: 31.01.1992
(51) Int. Cl.: C04B 41/91

(54) **Tool of silicon nitride sintered body**
Werkzeug aus gesintertem Siliciumnitrid
Outil en nitrure de silicium fritté

(30) Priority: 15.02.1991 JP 22370/91; 28.02.1991 JP 34695/91
(43) Date of publication of application: 26.08.1992
(73) Proprietor: SUMITOMO ELECTRIC INDUSTRIES, LIMITED, Osaka 541 (JP)
(72) Inventor: Moriguchi, Hideki, c/o Itami Works, Itami-shi, Hyogo (JP); Kobayashi, Mitsunori, c/o Itami Works, Itami-shi, Hyogo (JP); Nomura, Toshio, c/o Itami Works, Itami-shi, Hyogo (JP); Nakamata, Tosiaki, 10-9, Shinmachi 1-chome, Nishi-ku, Osaka (JP)
(74) Representative: Kirschner, Klaus Dieter, Dipl.-Phys.

(56) References cited:
- EP-A- 0 298 729
- DE-A- 3 423 911
- WORLD PATENT INDEX LATEST, Derwent Publications Ltd., LONDON, GB. Week 8042. &JP-A-55113672(Tokyo Shibaura El. Ltd)03-09-1980
- CERAMICS INTERNATIONAL. vol. 16, no. 5, 1990, BARKING, ESSEX GB pages 253 -
- 257; W.J. TOMLINSON ET AL: 'Effect of grindin, lapping and various surface treatments on the strength of silicon nitride'
- WORLD PATENT INDEX LATEST, Derwent Publications Ltd., LONDON, GB. Week 8201. &JP-A-56155080(Sumitomo Elec.Ind.K.K.)01-12-1981

## Description

### BACKGROUND OF THE INVENTION

### Field of the Invention

The present invention relates to a tool of a surface-coated silicon nitride sintered body which is excellent in wear resistance and toughness at least in a portion operating as a tool.

### Description of the Background Art

In the field of a cutting tool and a wear-resistant tool, an attempt has generally been made in order to substitute a ceramic tool for a high-speed steel tool, a cemented carbide tool or a coated tool, and an Aℓ₂O₃-based tool was first developed in the 1950s. However, this tool was not brought into practice at the outset since its toughness was too small. Thereafter an improvement was made in order to increase toughness of the tool by adding TiC, ZrO₂ (Japanese Patent Publication No. 59-6274 (1984)), SiC whisker (Japanese Patent Laying-Open No. 61-274803 (1986)) or the like, whereby the tool was practically applied to finish cutting of cast iron or the like. However, it was impossible to use the tool for rough cutting and intermittent cutting since its toughness was still insufficient with inferior reliability. On the other hand, a silicon nitride sintered body can be widely applied to rough/finish cutting, wet cutting etc. of cast iron with high reliability since the same has higher toughness as compared with an Aℓ₂O₃ sintered body and high thermal shock resistance with a small thermal expansion coefficient. Japanese Patent Publication Nos. 61-19367 (1986) and 62-13430 (1987) have proposed tools which are obtained by coating surfaces of silicon nitride sintered bodies having such excellent characteristics with a Ti compound, Aℓ₂O₃ and the like thereby improving wear resistance of silicon nitride.

As to such a silicon nitride sintered body, extensive study has been made in relation to a sintering assistant, for the purpose of improving strength. This is because silicon nitride is a highly covalent compound which has a large ratio of grain boundary energy to surface energy as compared with ionic and metallic crystals and causes extremely slow self-diffusion, and is hardly sintered at a high temperature due to decomposition and evaporation. To this end, there has been developed a technique of forming a glass phase having a low melting point with a sintering assistant such as MgO, Y₂O₃, Aℓ₂O₃, ZrO₂, AℓN, CaO, CeO₂, SiO₂ or the like for obtaining a dense sintered body by liquid phase sintering. In the history of development concerning such assistants, the development of the sintering assistant such as Y₂O₃ was extremely important in a point that not only the sintered body was densified but also silicon nitride crystal grains were developed in columnar shapes to improve strength of the silicon nitride sintered body by a theory of fiber reinforcement (see Japanese Patent Publication No. 48-7486 (1973)). In this sintering mechanism, α-Si₃N₄ is dissolved in a molten glass phase which has been formed at a high temperature, deposited as β-Si₃N4 (or β'-SIALON) by a dissolution/redeposition phenomenon, and grown in a C-axis direction of a hexagonal system under presence of Y₂O₃, to form columnar silicon nitride particles. Due to such technical development, it has been made possible to improve strength of silicon nitride, which is now practically applied to a ceramic tool capable of carrying out rough cutting, intermittent cutting and rough milling of cast iron.

Such development of the sintering assistant and employment of gaseous nitrogen pressure sintering have also enabled normal pressure sintering of silicon nitride, which had generally been prepared only by a hot press method, and it has been made possible to prepare a sintered body of a complicated configuration in a near net shape, i.e., in a shape substantially close to that of the final product.

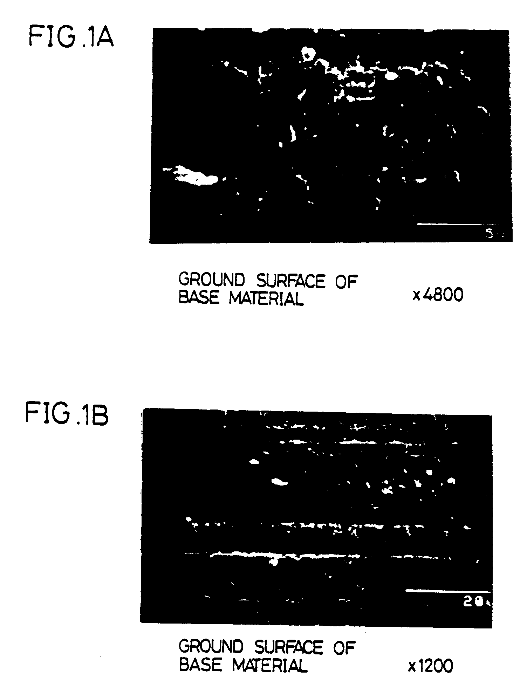

However, although it has been made possible to work a sintered body into a near net shape by the aforementioned technical development, there has not yet been developed a product of a silicon nitride tool which is directly formed by a as-sintered surface similarly to a cemented carbide or cermet tool or formed by a directly coated as-sintered surface, but a general silicon nitride tool is ground to be finished in a desired shape under the present circumstances. Thus, strength of the sintered body is reduced by cracks resulting from flaws which are caused in grinding, and the manufacturing cost is increased since silicon nitride is extremely hard to work. Figs. 1A and 1B are microphotographs taken through a scanning electron microscope (hereinafter referred to as "SEM"), showing the state of a ground surface of a base material.

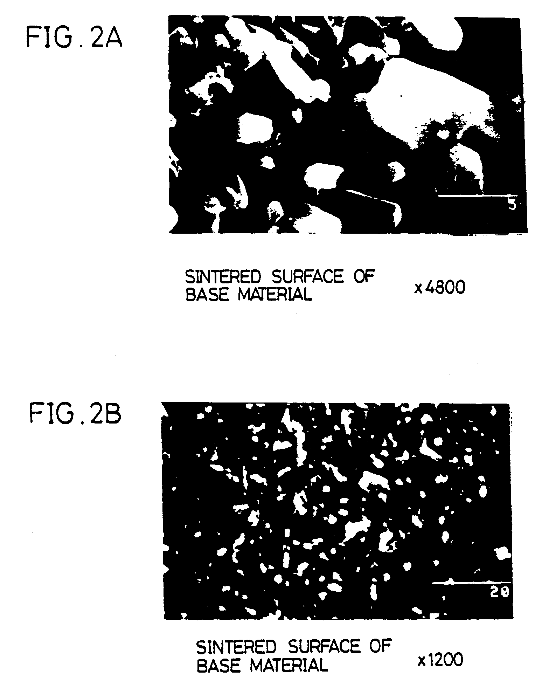

Although an attempt has been made to mold silicon nitride into a desired shape and finish the same as a product with no grinding or through an after treatment with a low-cost method other than grinding, the as-formed product is deteriorated in strength and reduced in wear resistance due to presence of abnormal phases formed on the surface of the sintered body. Such abnormal phases appearing on the surface of the sintered body may be formed by sublimation/decomposition of Si₃N₄, scattering of grain boundary glass phases and the like. In relation to such a problem, there has been proposed an attempt of oxidizing the surface of a silicon nitride sintered body and forming a film which is mainly composed of silicon dioxide for covering abnormal phases appearing on the surface of the sintered body, thereby drawing out characteristics provided in the silicon nitride sintered body itself (Japanese Patent Laying-Open No. 2-164773 (1990)). When such a sintered body is applied to a tool in practice, however, deposition is easily caused between the tool and a workpiece due to silicate glass phases having a low melting point which are formed on the surface of the sintered body, to reduce wear resistance. There has also been proposed a method of sintering a vessel of a specific material containing a pressed body of silicon nitride based on silicon nitride group powder within a graphite crucible in a state buried in the silicon nitride group powder thereby obtaining a sintered material which can be applied to practical use in the sintered state (Japanese Patent Publication No. 62-30152 (1987)). On the surface of the as-formed sintered body, however, freely grown columnar crystal grains of silicon nitride are formed as shown in Figs. 2A and 2B, similarly to the case of an ordinary normal pressure sintering method. The columnar silicon nitride crystal grains, which are of β-Si₃N₄ (or β'-SIALON), are intertwined in the sintered body to improve its strength by the mechanism of fiber reinforcement as described above, thereby enabling cutting work, such as rough milling or intermittent cutting of cast iron, of the ceramic tool. This phenomenon is specific to a silicon nitride sintered body which is improved in strength, and not observed in a as-sintered surface of a cermet or cemented carbide tool.

The crystal grains of β-Si₃N₄ (or β'-SIALON) freely grown on the surface of the sintered body are instable due to the free growth, and merely fixed by glass phases mainly composed of sintering aid in end portions of columnar crystal grains. Therefore, the crystal grains easily drop when external stress is applied to the sintered body, while surface roughness of the sintered body is increased due to clearances defined between the columnar particles. When a sintered body having such a surface is applied to a tool, therefore, its wear resistance is reduced and strength is deteriorated by droppage of the columnar crystal grains.

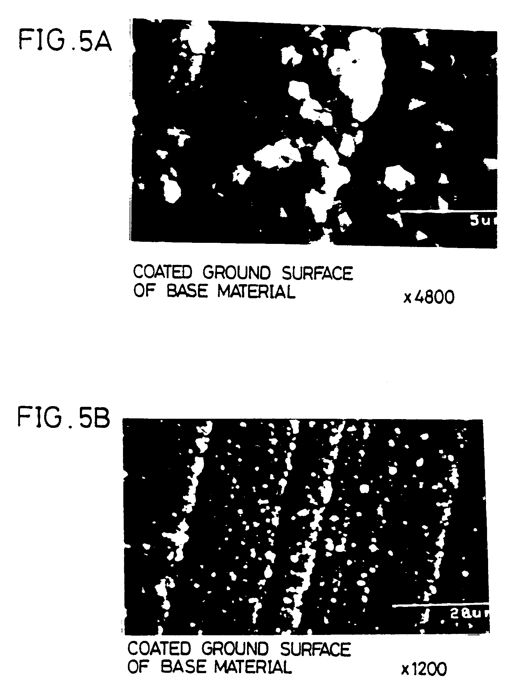

In the case of a surface-coated silicon nitride sintered body which is used as a tool, external stress is applied to a film covering the surface of its base material to easily cause a dropping phenomenon, while its surface roughness is increased due to clearances defined between columnar particles, and core generating portions of the coating film are irregularized to cause local grain growth, leading to formation of a massive coating film as shown in Figs. 5A and 5B.

When a sintered body having such surface phases is applied to a tool, therefore, cutting resistance is disadvantageously increased and the coating film easily drops to damage the effect of coating. Such a problem is specific to a tool of a surface-coated silicon nitride sintered body which is improved in strength by columnar β-Si₃N₄ (or β'-SIALON), and is not observed in a film coated on a cemented carbide tool. Also in a silicon nitride sintered body, this problem has not been caused merely since a ground sintered body has been coated in general. The inventors have made deep study in order to obtain a tool of a surface-coated silicon nitride sintered body which is excellent in wear resistance as well as toughness and can be manufactured at a low cost by a method other than grinding, and clarified the aforementioned problem for the first time.

In Ceramics International, Vol. 16(5) 1990, pages 253-257 the effect of grinding, lapping and various surface treatments on the strength of silicon nitride is discussed.

JP-A-55113672 a silicon nitride is diclosed which has been prepared by removing surface layer from moulded and sintered material synthesized in vapour phase.

JP-A-56155080 a coated sintered silicon nitrided cutting tools is disclosed having intermediate coating of boide, carbide, carbonitride and top coating of aluminum oxide and/or zirconium oxide.

DE-A-3 423 911 disloses a surface treated ceramic material on SiAlON-basis.

### SUMMARY OF THE INVENTION

An object of the present invention is to provide a tool of a silicon nitride sintered body and a tool of a surface-coated silicon nitride sintered body, each of which is excellent in wear resistance as well as toughness and can be manufactured at a low cost, by improving the surface state of a silicon nitride sintered body.

A tool of a silicon nitride sintered body for attaining the aforementioned object is characterized in claim 1.

In the present invention, blasting, barreling or a treatment through ultrasonic vibration is employed as means for removing freely grown columnar β-Si₃N₄ (or β'-SIALON) with no grinding, thereby enabling a low-cost treatment which causes no flaw on the surface.

In another aspect of the present invention, it has been found possible to effectuate characteristics which are originally provided in a silicon nitride sintered body by removing columnar β-Si₃N₄ (or β'-SIALON) freely grown on the surface of the silicon nitride sintered body whose strength is improved by β-Si₃N₄ (or β'-SIALON) and coating the surface with a single or composite layer of at least one component selected from carbide, nitride, carbonitride and nitride carbonate of Ti having a thickness of at least 0.1 µm and not more than 10 µm and/or a layer of Aℓ₂O₃ having a thickness of at least 0.4 µm and not more than 10 µm, for applying such a surface-coated silicon nitride sintered body to a tool.

The coating films for the tool of the silicon nitride sintered body are restricted in thickness for the following reasons: The single or composite coating layer of at least one of carbide, nitride, carbo-nitride and nitride carbonate of Ti is adapted to improve abrasive wear resistance of the silicon nitride sintered body as well as to increase adhesion strength between silicon nitride and Aℓ₂O₃ when the coating film contains Aℓ₂O₃, thereby effectively suppressing abnormal growth of Aℓ₂O₃ crystal grains. However, such effects are reduced if the thickness of the coating film is not more than 0.1 µm, while toughness of the tool is unpreferably reduced if the thickness is in excess of 10 µm. As to the Aℓ₂O₃ film, an effect of improving wear resistance of the silicon nitride sintered body can be expected. However, this effect is reduced if the thickness is not more than 0.4 µm, while Aℓ₂O₃ crystal grains are made coarse if the thickness exceeds 10 µm, to disadvantageously reduce the wear resistance.

It is effective to coat the outermost surface of the sintered body with titanium nitride in order to facilitate identification of a spent corner and improve the appearance. However, such effects are reduced if the thickness of this film is smaller than 0.1 µm, while the effects are not particularly increased even if the thickness exceeds 5 µm, and no industrial effect is attained. An effect of reducing cutting resistance can also be expected in such coating of titanium nitride.

When the innermost coating layer is made of TiN or TiCN, diffusion of nitrogen, which is contained in the base material of Si₃N₄, and TiN or TiCN can be expected. Therefore, it is possible to obtain a coating layer which is particularly excellent in adhesion strength with the base material. In this case, the effect of improving adhesion strength is insufficient if the thickness of the TiN or TiCN layer is smaller than 0.1 µm, while no further improvement of adhesion strength is expected if the thickness exceeds 1.0 µm. Therefore, the thickness of the TiN or TiCN film is preferably in a range of 0.1 to 1.0 µm.

The silicon nitride sintered body employed in the present invention is prepared by a well-known method of mold-pressing a mixture of silicon nitride powder and a sintering assistant under a pressure of 1 ton/cm² and sintering the same in a nitrogen atmosphere at a temperature of 1700 to 1900°C under a normal pressure or performing hot hydraulic pressing after the normal pressure sintering. The silicon nitride powder employed in the present invention preferably has an α rate, i.e., a content of α-Si₃N₄, of at least 90 percent by weight. This is because silicon nitride raw material powder having an α rate of at least 90 percent is preferably employed for obtaining a silicon nitride sintered body having high strength with intertwined columnar β-Si₃N₄ (or β'-SIALON). The raw material powder of silicon nitride is prepared by imide decomposition. This is because silicon nitride raw material powder prepared by imide decomposition is made of fine particles in high purity, easily dissolved in a liquid phase formed by a sintering assistant, and facilitates preparation of a silicon nitride sintered body in which fine particles of β-Si₃N₄ (or β'-SIALON) having large aspect ratios are intertwined by a dissolution/re-deposition phenomenon.

The sintering aid preferably contains at least 1 percent by weight and not more than 20 percent by weight of at least one of MgO, Y₂O₃, Aℓ₂O₃, ZrO₂, AℓN, CaO, CeO₂ and SiO₂. Such a sintering aid facilitates improvement of the degree of sintering, so that a dense sintered body can be obtained by normal pressure sintering. It is difficult to carry out the normal pressure sintering if the amount of the sintering aid is not more than 1 percent by weight, while wear resistance of the sintered body is unpreferably reduced if the amount exceeds 20 percent by weight. Addition of Y₂O₃ and CeO₂ is particularly preferable since silicon nitride crystal grains are brought into columnar crystal states to improve strength of the sintered body. When 1 to 30 percent by weight of at least one of carbide, nitride, boride and carbo-nitride of Ti is added, the as-formed sintered body is improved in hardness as well as wear resistance. This effect is reduced if the amount is not more than 1 percent by weight, while the degree of sintering is unpreferably reduced if the amount exceeds 30 percent by weight.

β-Si₃N₄ (or β'-SIALON) freely grown on the surface of the as-formed silicon nitride sintered body can be removed by any method other than grinding so far as the treatment is at a low cost, while conceivable means are blasting, barreling and a treatment through ultrasonic vibration. As to the blasting, Aℓ₂O₃ of #120 is projected under a pressure of 4 kg/cm², for example. As to the barreling, water is added to SiC of #120 and the mixture is rotated at 2000 r.p.m., for example. As to the treatment through ultrasonic vibration, an ultrasonic vibrator of 600 W is employed to carry out the treatment in water which contains diamond abrasive grains for about 3 hours, for example. A projector or a medium employed in the blasting or the barreling can be prepared from a ceramic material such as SiC, Aℓ₂O₃ or the like, or a glass material such as SiO₂.

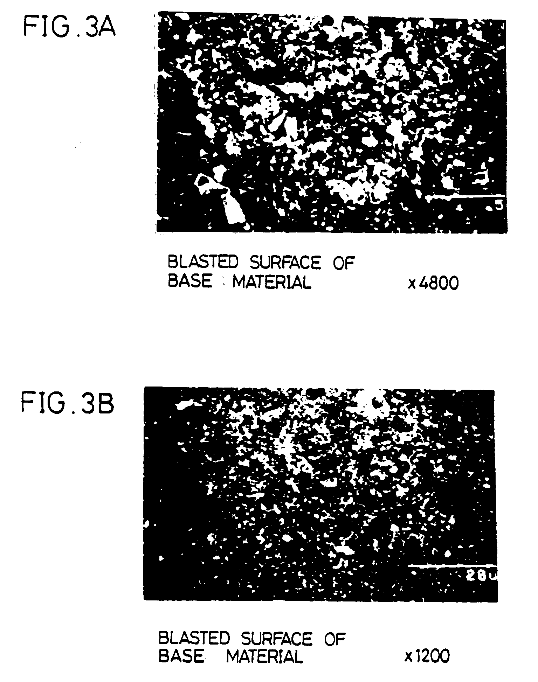

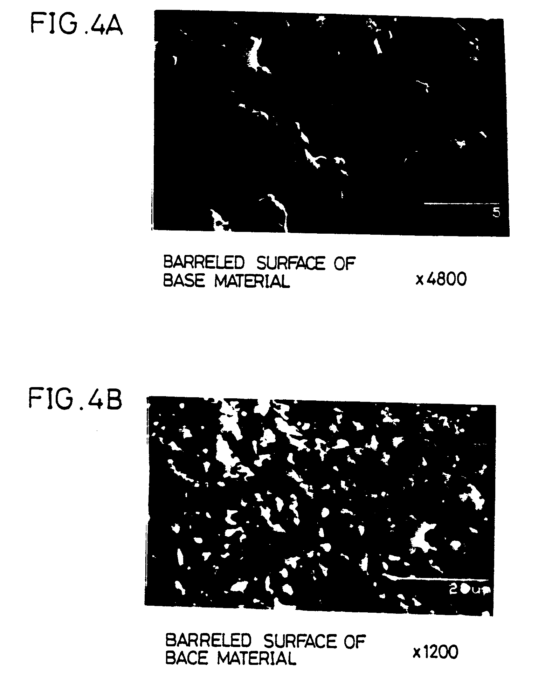

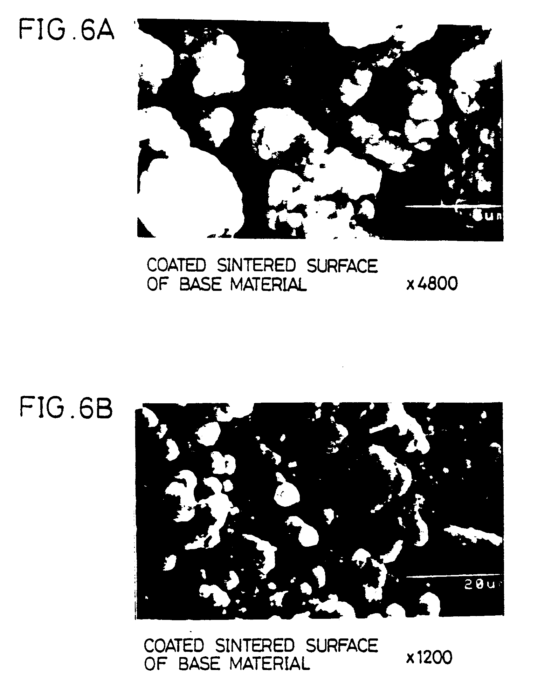

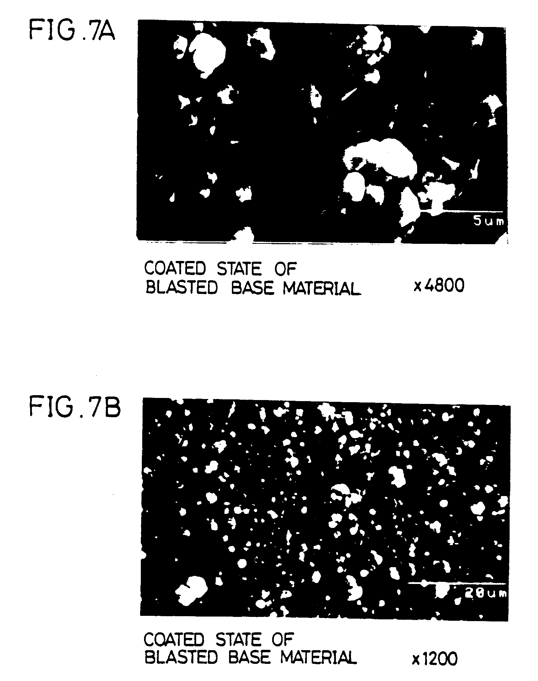

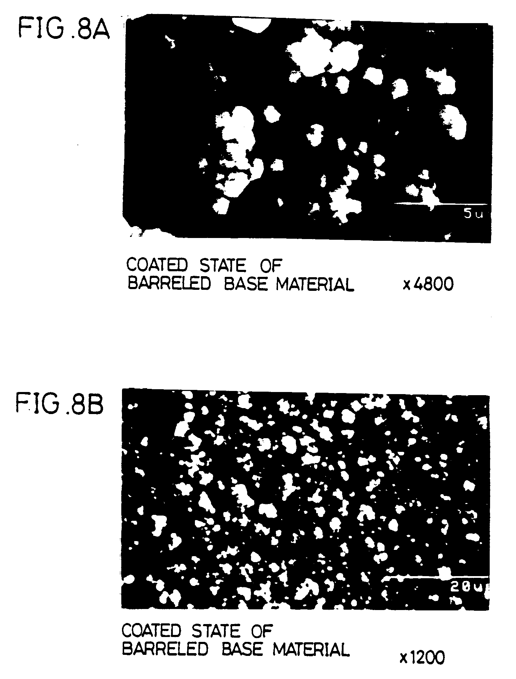

Figs. 3A and 3B are SEM microphotographs showing the surface of a silicon nitride sintered body from which freely grown columnar silicon nitride particles have been removed by blasting, and Figs. 4A and 4B are SEM microphotographs showing the surface of a silicon nitride sintered body from which freely grown columnar silicon nitride particles have been removed by barreling. Figs. 7A, 7B, 8A and 8B are SEM microphotographs showing the surfaces of surface-coated silicon nitride sintered bodies obtained by coating the as-treated sintered bodies with TiCN layers of 0.5 µm, Aℓ₂O₃ layers of 1.5 µm and outermost layers of TiN of 0.2 µm in thickness. It is understood that, in a surface-coated silicon nitride sintered body comprising a base material of a sintered body from which freely grown columnar silicon nitride particles have been removed, sizes of crystal grains contained in the coating film are substantially identical to those of the same type of coating film (see Figs. 5A and 5B) formed on a ground surface (see Figs. 2A and 2B) with remarkable difference from those of a coating film directly formed on an as-sintered surface as shown in Figs. 6A and 6B, and a massive coating film is extremely reduced. This may be because inhomogeneous core generation of the coating film is hard to occur since the surface has been smoothed by barreling or blasting. It is possible to decide whether or not columnar silicon nitride particles freely grown on the surface are removed, by measuring a half-power band width of a diffraction peak of β-Si₃N₄ (or β'-SIALON), i.e., the width of an angle of diffraction evaluated when the height of the diffraction peak is halved, by X-ray diffraction, or by lapping and etching a section of a coated portion and thereafter observing the same with a light-optic microscope.

In the inventive surface-coated silicon nitride sintered body, the 10 point mean surface roughness Rz of the surface is preferably not more than 3 µm, assuming that the detection distance is 2.5 mm. If the value Rz is in excess of 3 µm, columnar β-Si₃N₄ (or β'-SIALON) freely grown on the surface of the sintered body cannot be sufficiently removed and wear resistance of the tool cannot be much improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1A is an SEM microphotograph of 4800 magnifications showing a ground surface of a silicon nitride sintered body, and Fig. 1B is an SEM microphotograph of 1200 magnifications showing the ground surface of the silicon nitride sintered body;
Fig. 2A is an SEM microphotograph of 4800 magnifications showing a as-sintered surface of a silicon nitride sintered body, and Fig. 2B is an SEM microphotograph of 1200 magnifications showing the as-sintered surface of the silicon nitride sintered body;
Fig. 3A is an SEM microphotograph of 4800 magnifications showing a blasted surface state of a silicon nitride sintered body, and Fig. 3B is an SEM microphotograph of 1200 magnifications showing the same surface as Fig. 3A;
Fig. 4A is an SEM microphotograph of 4800 magnifications showing a barreled surface state of a silicon nitride sintered body, and Fig. 4B is an SEM microphotograph of 1200 magnifications showing the same surface as Fig. 4A;
Fig. 5A is an SEM microphotograph of 4800 magnifications showing a coated surface state of a ground base material for a silicon nitride sintered body, and Fig. 5B is an SEM microphotograph of 1200 magnifications showing the same surface as Fig. 5A;
Fig. 6A is an SEM microphotograph of 4800 magnifications showing a coated surface state of a sintered base material for a silicon nitride sintered body, and Fig. 6B is an SEM microphotograph of 1200 magnifications showing the same surface as Fig. 6A;
Fig. 7A is an SEM microphotograph of 4800 magnifications showing a coated surface state of a blasted base material for a silicon nitride sintered body, and Fig. 7B is an SEM microphotograph of 1200 magnifications showing the same surface as Fig. 7A; and
Fig. 8A is an SEM microphotograph of 4800 magnifications showing a coated surface state of a barreled base material for a silicon nitride sintered body, and Fig. 8B is an SEM microphotograph of 1200 magnifications showing the same surface as Fig. 8A.

### DESCRIPTION OF THE PREFERRED EMBODIMENTS

Examples of the present invention are now described.

### Example 1:

Silicon nitride raw material having a mean particle diameter of 0.4 µm as well as an α crystallization rate of 96 percent and containing 1.5 percent by weight of oxygen was wet-blended with 5 percent by weight of Y₂O₃ powder of 0.8 µm in mean particle diameter and 3 percent by weight of Aℓ₂O₃ of 0.4 µm in mean particle diameter in ethanol for 100 hours through a ball mill of nylon and thereafter dried to obtain mixed powder, which in turn was press-molded under a pressure of 1 ton/cm² through a metallic mold having a tool shape of SNMN120408. The as-formed compact was sintered in a pressure sintering furnace with gaseous nitrogen of 5 atm. at 1800°C for 2 hours, and only a rake face was ground to obtain a silicon nitride sintered body X having the tool shape of SNMN120408.

**Table 1**

| Sample | Material |
|---|---|
| *A | Sintered Body X Barreled for 1 minute |
| B | Sintered Body X Barreled for 5 minutes |
| C | Sintered Body X Bareled for 60 minutes |
| D | Sintered Body X Blasted for 10 minutes |
| ^{*}E | Sintered Body Oxidized at 1500°C |
| ^{*}F | Untreated Sintered Body X |

| | |
|---|---|
| (Note) * Comparative Samples out of the scope of the invention | |

Tools of the as-obtained silicon nitride sintered body were subjected to cutting tests under the following conditions:

### (Cutting Test 1)

Workpiece: FC25
Cutting Speed: 600 m/min.
Feed Rate: 0.4 mm/rev.
Depth of Cut: 1.5 mm
Cutting Oil: dry
Cutting Time: 10 min.

### (Cutting Test 2)

Workpiece: FC25
Cutting Speed: 200 m/min.
Feed Rate: 0.2 mm/edge
Depth of Cut: 2.5 mm
Cutting Oil: dry
Cutting Time: 10 min.

Table 2 shows the results of the aforementioned cutting tests. From the results shown in Table 2, it is understood that the inventive samples B to D are superior in wear resistance and chipping resistance to the comparative samples A, E and F, which are out of the scope of the present invention. In the sample A, the surface of the sintered body was roughened as compared with the samples B to D due to insufficient removal of freely grown β-Si₃N₄ (or β'-SIALON), and the flank wear was relatively increased as the results of the cutting tests. In the sample E which was prepared by oxidizing the surface of the sintered body, flank wear was extremely increased as the results of the cutting tests, although the surface roughness Rz was at the minimum value of 1.5 µm. This may be because wear resistance of this sample was deteriorated due to a low melting point of the oxide film of silicate glass which was formed on its surface, although the surface was smoothed by oxidation.

**Table 2**

| Sample | Rz (µn) | Results of Cutting Tests (Flank Wear Width [mm]) | |
|---|---|---|---|
| | | Test 1 | Test 2 |
| * A | 3.8 | 0.23 | 0.21 |
| B | 1.9 | 0.19 | 0.15 |
| C | 1.6 | 0.18 | 0.13 |
| D | 1.4 | 0.16 | 0.12 |
| *E | 1.5 | 0.44 | 0.42 |
| *F | 4.5 | 0.47 | Chipped in 3 minutes |

| | | | |
|---|---|---|---|
| (Note) *: Comparative Samples out of the scope of the invention | | | |

### Example 2:

Silicon nitride raw material having a mean particle diameter of 0.4 µm as well as an α crystallization rate of 96 percent and containing 1.5 percent by weight of oxygen was wet-blended with 5 percent by weight of Y₂O₃ powder of 0.8 µm in mean particle diameter and 3 percent by weight of Aℓ₂O₃ powder of 0.4 µm in mean particle diameter in ethanol for 100 hours through a ball mill of nylon and thereafter dried to obtain mixed powder, which in turn was press-molded under 1 ton/cm² in a metallic mold having a tool shape of SNMN120408. The as-formed compacts were sintered in a pressure sintering furnace with gaseous nitrogen of 5 atm. at 1800°C for 2 hours and only rake faces were ground, to obtain silicon nitride sintered bodies Y having the tool shape of SNMN120408.

The surface of the sintered body X was coated with TiCN in a thickness of 0.5 µm, Aℓ₂O₃ in a thickness of 1.5 pm and TiN in a thickness of 0.2 µm in this order by CVD, to obtain a coated silicon nitride sintered body Z.

The sintered bodies Y were subjected to treatments shown in Table 3 and coated in a similar manner to the aforementioned coated silicon nitride sintered body Z, thereby preparing samples G to M.

**Table 3**

| Sample | Material |
|---|---|
| *G | Sintered Body Y Barreled for 1 Minute and Coated on Its Surface |
| H | Sintered Body Y Barreled for 5 Minutes and Coated on Its Surface |
| I | Sintered Body Y Barreled for 60 Minutes and Coated on Its Surface |
| J | Sintered Body Y Blasted for 10 Minutes and Coated on Its Surface |
| *K | Sintered Body Y Oxidized at 1500°C and Coated on Its Surface |
| ^{*}L | Untreated Sintered Body Y |
| ^{*}M | Coated Silicon Nitride Sintered Body Z |

| | |
|---|---|
| (Note) ^{*}: Comparative Samples out of the scope of the invention | |

Tools of the as-obtained silicon nitride sintered bodies were subjected to cutting tests under the following conditions:
Workpiece: FC25
Cutting Speed: 600 m/min.
Feed Rate: 0.4 mm/rev.
Depth of Cut: 1.5 mm
Cutting Oil: dry
Cutting Time: 10 min.

Table 4 shows the results of the cutting tests. From the results shown in Table 4, it is understood that the inventive samples G to J are superior in wear resistance to the samples K to M, which are out of the scope of the present invention. In the sample G, the surface of the sintered body was roughened as compared with the samples H to J due to insufficient removal of freely grown β-Si₃N₄ (or β'-SIALON), and flank wear was relatively increased as the result of the cutting test. In the sample K which was prepared by oxidizing the surface of the sintered body and coating the same, flank wear was extremely increased as the result of the cutting test although the surface roughness Rz was at the minimum value of 1.5 µm. This may be because its wear resistance was deteriorated due to a low melting point of the oxide film of silicate glass which was formed on the surface, although the surface was smoothed by oxidation.

**Table 4**

| Sample | Rz(µm) | Results of Cutting Test (Flank Wear Width [mm]) |
|---|---|---|
| *G | 4.0 | 0.22 |
| H | 2.0 | 0.13 |
| I | 1.7 | 0.09 |
| J | 1.5 | 0.08 |
| ^{*}K | 1.5 | 0.44 |
| *L | 4.5 | 0.47 |
| ^{*}M | 5.8 | 0.45 |

| | | |
|---|---|---|
| (Note) *: Comparative samples out of the scope of the invention | | |

### Example 3:

Base materials were formed by the sintered body H which was prepared in Example 2 and coated with layers shown in Table 5. Table 6 shows values of adhesion strength of these samples.

**Table 5**

| Sample | Structure and Thickness of Coating Layer (Inner Layer - Outer Layer) [µm] |
|---|---|
| N | TiN(0.5) → Aℓ₂O₃(1.5) → TiN(0.2) |
| O | TiCN(0.5) → Aℓ₂O₃(1.5) → TiN(0.2) |
| P | TiC(0.5) → Aℓ₂O₃(1.5) → TiN(0.2) |
| Q | Aℓ₂O₃(1.5) → TiN(0.2) |

**Table 6**

| Sample | Adhesion Strength |
|---|---|
| N | 600 |
| O | 550 |
| P | 250 |
| Q | 400 |

In order to measure the adhesion strength, a constant load was applied to a diamond cone having a tip radius of 200 µm and a vertical angle of 120° for scratching a distance of 3 mm, to evaluate a load causing separation as adhesion strength.

From the results shown in Table 6, it is understood that the coating layers are improved in adhesion strength when the innermost layers are prepared from TiN or TiCN.

### Example 4:

The samples prepared in Example 3 were subjected to cutting tests under the same conditions as Example 2. Table 7 shows the results.

**Table 7**

| Sample | Results of Cutting Test (Flank Wear Width [mm]) |
|---|---|
| N | 0.16 |
| O | 0.13 |
| P | 0.30 |
| Q | 0.21 |

Although the present invention has been described and illustrated in detail, it is clearly understood that the same is by way of illustration and example only and is not to be taken by way of limitation.

## Claims

1. A tool of a silicon nitride sintered body prepared from a silicon nitride raw material powder as well as a sintering aid and being sintered under a normal pressure at least in a portion operating as a tool, characterised in that
the silicon nitride raw material powder is prepared by imide decomposition,
β-Si₃N₄ (including β'-SIALON) freely grown on the surface is removed by blasting, barreling or treatment through ultrasonic vibration from at least a part of the as-sintered surface of said silicon nitride sintered body in a position of said portion operating as a tool,
the surface of the sintered body after said blasting, barreling or treatment through ultrasonic vibration has a 10 point mean surface roughness Rz of not more than 3µm.

2. A tool of a silicon nitride sintered body in accordance with claim 1, wherein said silicon nitride sintered body contains 1 to 30 percent by weight of at least one component selected from carbide, nitride, carbo-nitride and boride of Ti and/or 1 to 20 percent by weight of at least one component selected from MgO, Y₂O₃, Al₂O₃, ZrO₂, AlN, CaO, CeO₂ and SiO₂ as said sintering aid.

3. A tool of a silicon nitride sintered body in accordance to claim 1 or 2, wherein the blasted, barreled or treated surface of the sintered body is coated with a single or a composite layer of at least one component selected from carbide, nitride, carbo-nitride and nitride carbonate of Ti having a thickness of at least 0.1 µm and not more than 10 µm and/or a layer of Al₂O₃ having a thickness of at least 0.4 µm and not more than 10 µm.

4. A tool of a silicon nitride sintered body in accordance with claim 3, wherein the outermost surface is coated with a layer of titanium nitride having a thickness of at least 0.1 µm and not more than 5 µm.

5. A tool of a silicon nitride sintered body in accordance with claim 3 or 4, wherein the innermost coating layer is made of TiN or TICN in a thickness of at least 0.1 µm and not more than 1.0 µm.

## Patentansprüche

1. Werkzeug aus einem gesinterten Siliziumnitridkörper, hergestellt aus einem Siliziumnitrid-Rohmaterialpulver und einem Sinterungshilfsmittel und gesintert unter einem Normaldruck mindestens in einem Bereich, der als Werkzeug dient, **dadurch gekennzeichnet, daß**
das Siliziumnitrid-Rohmaterialpulver durch Imid-Zersetzung hergestellt ist, daß
β-Si₃N₄ (einschließlich β'-SIALON), das frei auf der Oberfläche aufgewachsen ist, durch Sandstrahlen, Trommelpolieren oder Behandeln mittels Ultraschallwellen von mindestens einem Teil der so-wie-gesinterten Oberfläche des gesinterten Siliziumnitridkörpers an einer Stelle des Bereiches entfernt ist, die als Werkzeug dient, und daß die Oberfläche des Sinterkörpers nach dem Sandstrahlen, Trommelpolieren oder Behandeln mittels Ultraschallwellen eine mittlere 10-Punkt-Oberflächenrauhigkeit Rz von nicht mehr als 3 µm aufweist.

2. Werkzeug aus einem gesinterten Siliziumnitridkörper nach Anspruch 1, worin der gesinterte Siliziumnitridkörper 1 bis 30 Gew.-% von mindestens einer Komponente enthält, die aus Karbid, Nitrid, Karbonitrid und Borid von Ti gewählt wurde und/oder 1 bis 20 Gew.% von mindestens einer Komponente, die aus MgO, Y₂O₃, Al₂O₃, ZrO₂, AlN, CaO, CeO₂ und SiO₂ als Sinterungshilfsmittel gewählt wurde.

3. Werkzeug aus einem gesinterten Siliziumnitridkörper nach Anspruch 1 oder 2, worin die abgeblasene, abgezogene oder behandelte Oberfläche des Sinterkörpers mit einer einzelnen oder zusammengesetzten Schicht mit mindestens einer Komponente beschichtet wurde, die aus Karbid, Nitrid, Karbonitrid und Nitridkarbonat von Ti mit einer Dicke von mindestens 0,1 µm und nicht mehr als 10 µm gewählt wurde und/oder einer Schicht aus Al₂O₃ mit einer Dicke von mindestens 0,4 µm und nicht mehr als 10 µm.

4. Werkzeug aus einem gesinterten Siliziumnitridkörper nach Anspruch 3, worin die äußerste Oberfläche mit einer Schicht aus Titannitrid mit einer Dicke von mindestens 0,1 µm und nicht mehr als 5 µm beschichtet ist.

5. Werkzeug aus einem gesinterten Siliziumnitridkörper nach Anspruch 3 oder 4, worin die innerste Schicht aus TiN oder TiCN mit einer Dicke von mindestens 0,1 µm und nicht mehr als 1,0 µm gefertigt ist.

## Revendications

1. Outil d'un corps fritté de nitrure de silicium préparé à partir d'une poudre de matière première de nitrure de silicium ainsi qu'un auxiliaire de frittage et qui est fritté sous pression normale au moins dans une portion fonctionnant comme outil, caractérisé en ce que
la poudre de matière première de nitrure de silicium est préparée par décomposition d'imide,
β-Si₃N₄ (incluant β'-SIALON) ayant poussé librement sur la surface est retiré par projection d'abrasif, polissage en tonneau ou traitement par vibration ultrasonique d'au moins une partie de la surface frittée dudit corps fritté de nitrure de silicium dans une position de ladite portion fonctionnant en tant qu'outil,
la surface du corps fritté après ladite projection d'abrasif, polissage au tonneau ou traitement par vibration ultrasonique possède une rugosité de surface moyenne sur 10 points Rz ne dépassant pas 3 µm.

2. Outil d'un corps fritté de nitrure de silicium conformément à la revendication 1, dans lequel ledit corps fritté de nitrure de silicium contient de 1 à 30 pourcent en poids d'au moins un composant choisi parmi le carbure, le nitrure, le carbo-nitrure et le borure de Ti et/ou 1 à 20 pourcent en poids d'au moins un composant choisi parmi MgO, Y₂O₃, Al₂O₃, ZrO₂, AlN, CaO, CeO₂ et SiO₂ en tant que ledit auxiliaire de frittage.

3. Outil d'un corps fritté de nitrure de silicium conformément à la revendication 1 ou 2, dans lequel la surface traitée par projection d'abrasif, polissage au tonneau ou aux ultrasons du corps fritté est revêtue d'une couche unique ou composite d'au moins un composant choisi parmi le carbure, le nitrure, le carbo-nitrure et le nitrure carbonate de Ti ayant une épaisseur d'au moins 0,1 µm et ne dépassant pas 10 µm et/ou une couche de Al₂O₃ ayant une épaisseur d'au moins 4 µm et ne dépassant pas 10 µm.

4. Outil d'un corps fritté de nitrure de silicium conformément à la revendication 3, dans lequel la surface la plus externe est revêtue d'une couche de nitrure de titane ayant une épaisseur d'au moins 0,1 µm et ne dépassant pas 5 µm.

5. Outil d'un corps fritté de nitrure de silicium conformément à la revendication 3 ou 4, dans lequel la couche de revêtement la plus interne est faite de TiN ou TiCN dans une épaisseur d'au moins 0,1 µm et ne dépassant pas 1,0 µm.
